(19) Europäisches Patentamt
European Patent Office
Office européen des brevets

(11) EP 1 379 582 B1

(12) **EUROPÄISCHE PATENTSCHRIFT**

(45) Veröffentlichungstag und Bekanntmachung des Hinweises auf die Patenterteilung:
**23.11.2005 Patentblatt 2005/47**

(21) Anmeldenummer: **02742871.3**

(22) Anmeldetag: **02.04.2002**

(51) Int Cl.[7]: **C08K 3/18**, C08K 3/24, C08K 5/17, C08K 5/3492, C08K 13/02, C08L 27/00

(86) Internationale Anmeldenummer:
**PCT/EP2002/003638**

(87) Internationale Veröffentlichungsnummer:
**WO 2002/098964 (12.12.2002 Gazette 2002/50)**

(54) **STABILISATORKOMBINATION FÜR HALOGENHALTIGE POLYMERE UND DEREN VERWENDUNG**

STABILISER COMBINATION FOR HALOGENATED POLYMERS AND THE USE THEREOF

COMBINAISON DE STABILISANTS POUR DES POLYMERES HALOGENS ET SON UTILISATION

(84) Benannte Vertragsstaaten:
**AT BE CH CY DE DK ES FI FR GB GR IE IT LI LU MC NL PT SE TR**

(30) Priorität: **11.04.2001 DE 10118179**

(43) Veröffentlichungstag der Anmeldung:
**14.01.2004 Patentblatt 2004/03**

(73) Patentinhaber: **Baerlocher GmbH
85716 Unterschleissheim (DE)**

(72) Erfinder:
- **FOKKEN, Stefan
85244 Biberbach (DE)**
- **REITH, Walther
82281 Egenhofen (DE)**

(74) Vertreter: **Fiesser, Gerold Michael et al
Kahlhöfer Neumann Herzog Fiesser
Patentanwälte
Isartorplatz 8
80331 München (DE)**

(56) Entgegenhaltungen:
- **DATABASE CA [Online] CHEMICAL ABSTRACTS SERVICE, COLUMBUS, OHIO, US; OHKUBO, YUICHI: "Vinyl chloride resin compositions having excellent heat stability without use of heavy metal-containing stabilizers" retrieved from STN Database accession no. 133:267655 XP002215426 & PATENT ABSTRACTS OF JAPAN vol. 2000, no. 13, 5. Februar 2001 (2001-02-05) & JP 2000 273259 A (C.I. KASEI CO.,LTD., JAPAN), 3. Oktober 2000 (2000-10-03)**
- **DATABASE CA [Online] CHEMICAL ABSTRACTS SERVICE, COLUMBUS, OHIO, US; SUGAHARA, YUJIRO ET AL: "Stabilizer compositions for chlorine-containing polymers" retrieved from STN Database accession no. 83:98562 XP002215427 & JP 50 039342 A (MIZUSAWA INDUSTRIAL CHEMICALS, LTD., JAPAN) 11. April 1975 (1975-04-11)**
- **DATABASE CA [Online] CHEMICAL ABSTRACTS SERVICE, COLUMBUS, OHIO, US; AKAMINE, HIROSHI: "Heat- and weather-resistant halogen polymer compositions with good mechanical properties" retrieved from STN Database accession no. 120:9718 XP002215428 & PATENT ABSTRACTS OF JAPAN vol. 19, no. 551 (C-1117), 5. Oktober 1993 (1993-10-05) & JP 05 156104 A (NITSUSAN FUERO YUKI KAGAKU KK, JAPAN), 22. Juni 1993 (1993-06-22)**

EP 1 379 582 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

- **DATABASE CA [Online] CHEMICAL ABSTRACTS SERVICE, COLUMBUS, OHIO, US; SUGAWARA, TAKEHITO ET AL: "Metal-free poly(vinyl chloride) compositions" retrieved from STN Database accession no. 108:168637 XP000215429 & PATENT ABSTRACTS OF JAPAN vol. 12, no. 159 (C-495), 14. Mai 1988 (1988-05-14) & JP 62 273243 A (ADEKA ARGUS CHEM CO LTD), 27. November 1987 (1987-11-27)**

## Beschreibung

Die vorliegende Erfindung betrifft eine Stabilisatorkombination, mindestens enthaltend einen Aminoalkohol und mindestens ein halogenhaltiges Salz einer Oxysäure und mindestens eine Verbindung mit einem Strukturelement der allgemeinen Formel I

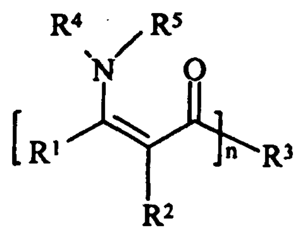

(I),

und damit stabilisierte Polymerzusammensetzungen.

Bekanntermaßen neigen halogenhaltige Kunststoffe bei thermischer Belastung während der Verarbeitung oder im Langzeitgebrauch zu unerwünschten Zersetzungs- und Abbaureaktionen. Bei dem Abbau halogenierter Polymerer, insbesondere bei PVC, entsteht Salzsäure, die aus dem Polymerstrang eliminiert wird woraus ein verfärbter, ungesättigter Kunststoff mit farbgebenden Polyensequenzen resultiert.

Besonders problematisch wirkt sich dabei aus, dass halogenhaltige Polymere erst bei einer relativ hohen Verarbeitungstemperatur die zur Verarbeitung notwendigen rheologischen Rahmenbedingungen aufweisen. Bei derartigen Temperaturen setzt jedoch bei unstabilisierten Polymeren bereits eine merkliche Zersetzung des Polymeren ein, die sowohl zu der oben beschriebenen unerwünschten Farbänderung als auch zu einer Änderung der Materialeigenschaften führt. Darüber hinaus kann die aus nicht stabilisierten, halogenhaltigen Polymeren bei einer derartigen Verarbeitungstemperatur freigesetzte Salzsäure zu einer merklichen Korrosion der Verarbeitungsanlagen führen. Dieser Vorgang spielt insbesondere dann eine Rolle, wenn es bei der Verarbeitung derartiger halogenierter Polymerer zu Formkörpern, beispielsweise durch Extrusion, zu Produktionsunterbrechungen kommt und die Polymermasse für eine längere Zeitdauer im Extruder verweilt. Während dieser Zeit kann es zu den obengenannten Zersetzungsreaktionen kommen, wodurch die im Extruder befindliche Charge unbrauchbar wird und der Extruder gegebenenfalls geschädigt wird.

Neben den hier geschilderten Problemen, die in einer frühen Phase der Herstellung von Formkörpern aus halogenhaltigen Polymeren auftreten, sind jedoch für die Gebrauchseigenschaften eines derartigen Formkörpers über einen längeren Zeitraum Farbstabilität und möglichst unveränderte Materialeigenschaften wichtig. Insbesondere bei Formkörpern, die Licht, wechselnden Temperaturen, Wasser oder anderen äußeren durch Bewitterung hervorgerufenen Einflüssen ausgesetzt sind, kommt es mit zunehmender Gebrauchsdauer zu Veränderungen der Farbe und der Materialeigenschaften, die zumindest die Ästhetik des Formkörpers nachteilig beeinflussen, gegebenenfalls jedoch auch bis zur Unbrauchbarkeit des Formkörpers fortschreiten können. Besonders eine Kombination aus Bestrahlung mit energiereicher Strahlung und thermischer Belastung, wie sie bei im Außenbereich eingesetzten Formkörpern häufig vorkommt, führen oft zu unerwünschten Veränderungen der Formkörper.

Durch den partiellen Ersatz von Titandioxid durch Zinksulfid wird nach der Lehre der EP-B 0 424572 die Bewitterungsstabilität von blei- und cadmiumstabilisierten PVC-U Formkörpern verbessert. Die Verwendung einer derartigen Stabilisatorkombination erhöht jedoch den Schwermetallgehalt des Formkörpers, was unter Umweltgesichtspunkten nicht erwünscht ist.

Um dem Problem der thermo- und strahlungsinduzierten Eigenschaftsveränderungen von Formkörpern aus halogenhaltigen Polymeren entgegenzuwirken, wurden in der jüngeren Vergangenheit beispielsweise Ca/Zn-Stabilisatorsysteme für weiße PVC-Formteile eingesetzt. Derartige Stabilisatorsystemen sind jedoch bezüglich einer Stabilisierung im Hinblick auf Thermostabilität und Bewitterungsstabilität nicht ausreichend wirksam.

Die Verwendung von OH-Gruppen enthaltenden Isocyanuraten zusammen mit Calciumhydroxid oder Calciumoxid wird beispielsweise in der WO 99/55777 beschrieben.

Die aus dem Stand der Technik bekannten Stabilisatorzusammensetzungen weisen zwar häufig einerseits im Hinblick auf Anfangsfarbe und Farbstabilität bei thermischer Belastung befriedigende Eigenschaften auf, andererseits verfügen andere aus dem Stand der Technik bekannte Stabilisatorzusammensetzungen über gute Eigenschaften im Hinblick auf eine Stabilisierung bei einer kombinierten Belastung durch energiereiche Strahlung und Wärme. Die bislang bekannten Zusammensetzungen waren jedoch im Hinblick auf eine Kombination beider Belastungstypen verbesserungsbedürftig.

Der vorliegenden Erfindung lag daher die Aufgabe zugrunde, eine Stabilisatorzusammensetzung zur Verfügung zu stellen, die als Bestandteil von halogenhaltigen Polymeren sowohl eine ausgezeichnete Anfangsfarbe als auch Farbstabilität gewährleistet. Darüber hinaus soll eine derartige Stabilisatorzusammensetzung auch im Hinblick auf einen Einsatz von aus einer derart stabilisierten Polymerzusammensetzung hergestellten Formkörpern im Außenbereich ausgezeichnete Farbstabilität bei thermischer Belastung und Belastung durch energiereiche Strahlung bieten.

Die der Erfindung zugrundeliegenden Aufgaben werden durch eine Stabilisatorzusammensetzung und eine Polymerzusammensetzung die eine derartige Stabilisatorzusammensetzung enthält, wie sie im nachfolgenden Text beschrieben sind, gelöst.

Gegenstand der vorliegenden Erfindung ist daher eine Stabilisatorzusammensetzung, mindestens enthaltend einen Aminoalkohol und mindestens ein halogenhaltiges Salz einer Oxysäure und mindestens eine Verbindung mit einem Strukturelement der allgemeinen Formel I

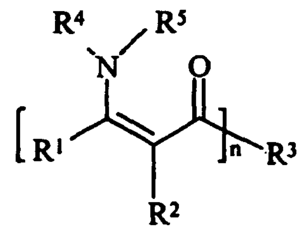 (I),

worin n für eine Zahl von 1 bis 100.000, die Reste $R^4$, $R^5$, $R^1$ und $R^2$ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest $R^1$ für einen gegebenenfalls substituierten Acylrest mit 2 bis 44 C-Atomen steht oder die Reste $R^1$ und $R^2$ zu einem aromatischen oder heterocyclischen System verbunden sind und worin der Rest $R^3$ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoalkylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit I bis 20 O- oder S-Atomen oder O- und S-Atomen oder für ein Polymeres, das über O, S, NH, $NR^4$ oder $CH_2C(O)$ mit dem in Klammern stehenden Strukturelement verbunden ist, steht oder der Rest $R^3$ mit dem Rest $R^1$ so verbunden ist, dass insgesamt ein gegebenenfalls substituiertes, gesättigtes oder ungesättigtes heterocyclisches Ringsystem mit 4 bis 24 C-Atomen gebildet wird.

Unter einer "Stabilisatorzusammensetzung" wird im Rahmen der vorliegenden Erfindung eine Zusammensetzung verstanden, die zur Stabilisierung halogenhaltiger Polymerer eingesetzt werden kann. Zur Erzielung dieses Stabilisierungseffekts wird eine erfindungsgemäße Stabilisatorzusammensetzung in der Regel mit einem zur Stabilisierung vorgesehenen, halogenhaltigen Polymeren vermischt und anschließend verarbeitet. Es ist jedoch ebenso möglich, eine erfindungsgemäße Stabilisatorzusammensetzung dem zu stabilisierenden, halogenhaltigen Polymeren während der Verarbeitung beizumischen.

Eine erfindungsgemäße Stabilisatorzusammensetzung weist mindestens drei Bestandteile auf. Als einen ersten Bestandteil enthält eine erfindungsgemäße Zusammensetzung mindestens einen Aminoalkohol.

Als Aminoalkohole sind im Rahmen der vorliegende Erfindung grundsätzlich alle Verbindungen geeignet, die mindestens eine OH-Gruppe und eine primäre, sekundäre oder tertiäre Aminogruppe oder eine Kombination aus zwei oder mehr der genannten Aminogruppen aufweisen. Grundsätzlich sind im Rahmen der vorliegenden Erfindung sowohl feste als auch flüssige Aminoalkohole als Bestandteil der erfindungsgemäßen Stabilisatorzusammensetzungen geeignet. Im Rahmen der vorliegenden Erfindung wird der Anteil an flüssigen Aminoalkoholen jedoch beispielsweise so gewählt, dass die gesamte Stabilisatorzusammensetzung im wesentlichen in fester Form vorliegt.

Im Rahmen einer weiteren bevorzugten Ausführungsform der vorliegenden Erfindung enthält eine erfindungsgemäße Stabilisatorzusammensetzung höchstens etwa 5 Gew.% an flüssigem Aminoalkohol oder einem Gemisch aus zwei oder mehr flüssigen Aminoalkoholen, vorzugsweise liegt der Anteil jedoch darunter, beispielsweise bei 1 Gew.-% oder weniger. Im Rahmen einer besonders bevorzugten Ausführungsform der vorliegenden Erfindung enthält eine erfindungsgemäße Stabilisatorzusammensetzung keinen flüssigen Aminoalkohole.

Im Rahmen der vorliegenden Erfindung einsetzbare Aminoalkohole weisen im Rahmen einer bevorzugten Ausführungsform der vorliegenden Erfindung einen Schmelzpunkt von mehr als etwa 30 °C, insbesondere mehr als

etwa 50 °C auf. Geeignete Aminoalkohole sind beispielsweise Mono- oder Polyhydroxyverbindungen die auf linearen oder verzweigten, gesättigten oder ungesättigten aliphatischen Mono- oder Polyaminen aufbauen.

Hierzu geeignet sind beispielsweise OH-Gruppen tragende Derivate primärer Mono- oder Polyaminoverbindungen mit 2 bis etwa 40, beispielsweise 6 bis etwa 20 C-Atomen. Beispielsweise sind dies entsprechende OH-Gruppen tragende Derivate von Ethylamin, n-Propylamin, i-Propylamin, n-Propylamin, sek.-Propylamin, tert.-Butylamin, 1-Aminoisobutan; substituierten Aminen mit zwei bis etwa 20 C-Atomen wie 2-(N,N-Dimethylamino)-1-aminoethan. Geeignete OH-Gruppen tragende Derivate von Diaminen sind beispielsweise solche, die auf Diaminen mit einem Molekulargewicht von etwa 32 bis etwa 200 g/mol aufbauen, wobei die entsprechenden Diamine mindestens zwei primäre, zwei sekundäre oder eine primäre und eine sekundäre Aminogruppe aufweisen. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan, Triethylamin, Tributylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo[3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Besonders geeignet sind aliphatische Aminoalkohole mit 2 bis etwa 40, vorzugsweise 6 bis etwa 20 C-Atomen, beispielsweise 1-Amino-3,3-dimethyl-pentan-5-ol, 2-Aminohexan-2',2"-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen in Betracht kommen.

Im Rahmen einer besonders bevorzugten Ausführungsform der vorliegenden Erfindung werden als Aminoalkohole heterocyclische Verbindungen eingesetzt, die über ein cyclisches, Aminogruppen aufweisendes Ringsystem verfügen, wobei die OH-Gruppen entweder direkt am Ring oder vorzugsweise über Spacer mit diesem verbunden sind.

Im Rahmen einer besonders bevorzugten Ausführungsform der vorliegenden Erfindung werden dabei heterocyclische Aminoalkohole eingesetzt, die mindestens 2, vorzugsweise mindestens 3 Aminogruppen im Ring aufweisen. Als zentraler Ringbestandteil der erfindungsgemäß einsetzbaren Aminoalkohole besonders geeignet sind hierbei die Trimerisierungsprodukte von Isocyanaten.

Besonders bevorzugt werden dabei hydroxylgruppenhaltige Isocyanurate der allgemeinen Formel II

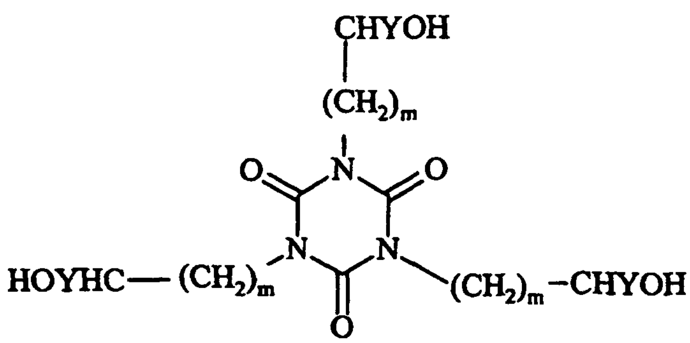

(II),

worin die Gruppen Y und die Indices m jeweils gleich oder verschieden sind und m für eine ganze Zahl von 0 bis 20 und Y für ein Wasserstoffatom oder eine lineare oder verzweigte, gesättigte oder ungesättigte Alkylgruppe mit 1 bis etwa 10 C-Atomen steht. Besonders bevorzugt ist im Rahmen der vorliegenden Erfindung der Einsatz von Tris(hydroxymethyl)-isocyanurat (THEIC) als Bestandteil der erfindungsgemäßen Stabilisatorzusammensetzungen.

Eine erfindungsgemäße Stabilisatorzusammensetzung kann beispielsweise nur einen Aminoalkohol enthalten. Es ist im Rahmen der vorliegenden Erfindung jedoch ebenso vorgesehen, dass eine erfindungsgemäße Stabilisatorzusammensetzung ein Gemisch aus zwei oder mehr verschiedenen Aminoalkoholen enthält.

Der gesamte Anteil von Aminoalkohol oder Aminoalkoholen an einer erfindungsgemäßen Stabilisatorzusammensetzung beträgt vorzugsweise mindestens etwa 0,1 Gew.-%. Die Obergrenze für den Anteil an Aminoalkohol oder Aminoalkoholen an einer erfindungsgemäßen Stabilisatorzusammensetzung beträgt etwa 99,9 Gew.-%, vorzugsweise

liegt die Obergrenze jedoch darunter, beispielsweise bei etwa 80 Gew.-% oder weniger, beispielsweise etwa 70, 50 oder 30 Gew.-%. Wenn eine erfindungsgemäße Stabilisatorzusammensetzung mehr als zwei Komponenten aufweist, so kann der Anteil an Aminoalkohol oder Aminoalkoholen beispielsweise auch in einem Bereich von etwa 0,5 bis etwa 25 Gew.-%, beispielsweise etwa 1 bis etwa 20 oder etwa 3 bis etwa 15 oder etwa 5 bis etwa 10 Gew.-% liegen.

Neben einem Aminoalkohol oder einem Gemisch aus zwei oder mehr Aminoalkoholen, wie bereits im Rahmen dieses Textes erläutert, enthält eine erfindungsgemäße Stabilisatorzusammensetzung noch mindestens zwei weitere Verbindungen.

Als mindestens eine weitere Verbindung sind halogenhaltige Salze der Oxysäuren, insbesondere die Perchlorate, geeignet. Beispiele für geeignete Perchlorate sind diejenigen der allgemeinen Formel $M(ClO_4)_k$, wobei M für Li, Na, K, Mg, Ca, Sr, Zn, Al, La oder Ce steht. Der Index k steht entsprechend der Wertigkeit von M für die Zahl 1, 2 oder 3. Die genannten Perchloratsalze können mit Alkoholen (Polyolen, Cyclodextrinen) oder Etheralkoholen beziehungsweise Esteralkoholen komplexiert sein. Zu den Esteralkoholen sind auch die Polyolpartialester zu zählen. Bei mehrwertigen Alkoholen oder Polyolen kommen auch deren Dimere, Trimere, Oligomere und Polymere in Frage, wie Di-, Tri-, Tetra- und Polyglykole, sowie Di-, Tri- und Tetrapentaerythrit oder Polyvinylalkohol in verschiedenen Polymerisations- und Verseifungsgraden. Als Polyolpartialester sind Glycerinmonoether und Glycerinmonothioether bevorzugt. Ebenfalls geeignet sind Zuckeralkohole oder Thiozucker.

Die Perchloratsalze können dabei in verschiedenen gängigen Darreichungsformen eingesetzt werden, beispielsweise als Salz oder wäßrigen Lösung aufgezogen auf ein geeignetes Trägermaterial wie PVC, Calciumsilikat, Zeolithe oder Hydrotalcite oder eingebunden durch chemische Reaktion in einen Hydrotalcit. Eine als Bestandteil der erfindungsgemäßen Stabilisatorzusammensetzung geeignete Kombinationen von Na-Perchlorat und Calciumsilikat kann beispielsweise durch Kombination einer wäßrigen Lösung von Na-Perchlorat (Gehalt an Na-Perchlorat etwa 60% oder mehr) mit Calciumsilikat, beispielsweise einem synthetischen, amorphen Calciumsilikat, erfolgen. Geeignete Teilchengrößen für das einsetzbare Calciumsilikat liegen beispielsweise bei etwa 0,1 bis etwa 50, beispielsweise etwa 1 bis etwa 20 µm. Geeignete perchlorathaltige Darreichungsformen werden beispielsweise in der US-A 5,034,443 beschrieben, auf deren perchlorathaltige Darreichungsformen betreffende Offenbarung ausdrücklich Bezug genommen wird und wobei diese Offenbarung als Bestandteil der Offenbarung des vorliegenden Textes angesehen wird.

Weitere geeignete Darreichungsformen sind beispielsweise in der EP-A 394,547, der EP-A 457,471 und der WO 94/24200 genannt, auf deren geeignete Darreichungsformen betreffende Offenbarung ausdrücklich Bezug genommen wird und wobei diese Offenbarung als Bestandteil der Offenbarung des vorliegenden Textes angesehen wird.

Eine erfindungsgemäße Stabilisatorzusammensetzung kann im Rahmen der vorliegenden Erfindung ein entsprechendes Salz einer halogenhaltige Oxysäure in einer Menge von etwa 0,1 bis etwa 50 Gew.-%, beispielsweise etwa 1 bis etwa 35 Gew.-%, insbesondere etwa 10 bis etwa 20 Gew.-%, jeweils abhängig von der Darreichungsform, enthalten. Bezogen auf den Gehalt an Anionen der halogenhaltige Oxysäure, beispielsweise bezogen auf den Gehalt an Perchloratanionen, beträgt der Gehalt der Stabilisatorzusammensetzung an Salzen einer halogenhaltigen Oxysäure beispielsweise etwa 0,01 bis etwa 20 Gew.-%, insbesondere etwa 1 bis etwa 10 Gew.-%.

Zusätzlich zu einem Aminoalkohol oder einem Gemisch aus zwei oder mehr Aminoalkoholen, wie bereits oben im Rahmen dieses Textes beschrieben, und einem halogenhaltigen Salz einer Oxysäure enthält eine erfindungsgemäße Stabilisatorzusammensetzung mindestens eine Verbindung mit einem Strukturelement gemäß der allgemeinen Formel I,

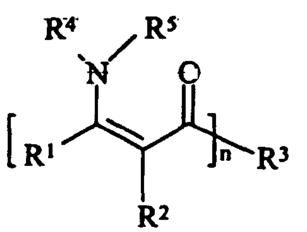

(I),

worin n für eine Zahl von 1 bis 100.000, die Reste $R^4$, $R^5$, $R^1$ und $R^2$ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest $R^1$ für einen gegebenenfalls substituierten Acylrest mit 2 bis 44 C-Atomen steht oder die Reste $R^1$ und $R^2$ zu einem aromatischen oder heterocyclischen System verbunden sind und worin der Rest $R^3$ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder

Mercaptoalkylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, $NR^4$ oder $CH_2C(O)$ mit dem in Klammern stehenden Strukturelement verbunden ist, steht oder der Rest $R^3$ mit dem Rest $R^1$ so verbunden ist, dass insgesamt ein gegebenenfalls substituiertes, gesättigtes oder ungesättigtes heterocyclisches Ringsystem mit 4 bis 24 C-Atomen gebildet wird, oder ein Gemisch aus zwei oder mehr Verbindungen mit einem Strukturelement gemäß der allgemeinen Formel I.

Im Rahmen einer bevorzugten Ausführungsform der vorliegenden Erfindung wird als Verbindung der allgemeinen Formel I eine auf einer $\alpha$,$\beta$-ungesättigten $\beta$-Aminocarbonsäure, insbesondere eine auf $\beta$-Aminocrotonsäure basierende Verbindung eingesetzt. Besonders geeignet sind hierbei die Ester oder Thioester der entsprechenden Aminocarbonsäuren mit einwertigen oder mehrwertigen Alkoholen oder Mercaptanen wobei X in den genannten Fällen jeweils für O oder S steht.

Wenn der Rest $R^3$ zusammen mit X für einen Alkohol- oder Mercaptanrest steht, so kann ein derartiger Rest beispielsweise aus Methanol, Ethanol, Propanol, Isopropanol, Butanol, 2-Ethylhexanol, Isooctanol, Isononanol, Decanol, Laurylalkohol, Myristylalkohol, Palmitylalkohol, Stearylalkohol, Ethylenglykol, Propylenglykol, 1,3-Butandiol, 1,4-Butandiol, 1,6-Hexandiol, 1,10-Decandiol, Diethylenglykol, Thio-Diethanol, Trimethylolpropan, Glyzerin, Tris-(2-hydroxymethyl)-isocyanurat, Triethanolamin, Pentaerythrit, Di-Trimethylolpropan, Diglyzerin, Sorbitol, Mannitol, Xylitol, Di-Pentaerythrit sowie den entsprechenden Mercaptoderivaten der genannten Alkohole gebildet werden.

Im Rahmen einer besonders bevorzugten Ausführungsform der vorliegenden Erfindung wird als Verbindung mit einem Strukturelement gemäß der allgemeinen Formel I eine Verbindung eingesetzt, in der $R^1$ für einen linearen Alkylrest mit 1 bis 4 C-Atomen, $R^2$ für Wasserstoff und $R^3$ für einen linearen oder verzweigten, gesättigten, ein- bis sechswertigen Alkyl- oder Alkylenrest mit 2 bis 12 C-Atomen oder einen linearen, verzweigten oder cyclischen 2- bis 6- wertigen Etheralkoholrest oder Thioetheralkoholrest steht.

Geeignete Verbindungen mit einem Strukturelement gemäß der allgemeinen Formel I umfassen beispielsweise $\beta$-Aminocrotonsäurestearylester, 1,4-Butandiol-di($\beta$-aminocrotonsäure)ester, Thio-diethanol-$\beta$-aminocrotonsäureester, Trimethylolpropan-tri-$\beta$-aminocrotonsäureester, Pentaerythrit-tetra-$\beta$-aminocrotonsäureester, Dipentaerythrit-hexa-$\beta$-aminocrotonsäureester und dergleichen. Die genannten Verbindungen können in einer erfindungsgemäßen Stabilisatorzusammensetzung jeweils alleine oder als Gemisch aus zwei oder mehr davon enthalten sein.

Ebenfalls im Rahmen der vorliegenden Erfindung als Verbindungen mit einem Strukturelement gemäß der allgemeinen Formel I geeignet sind Aminouracilverbindungen der allgemeinen Formel III

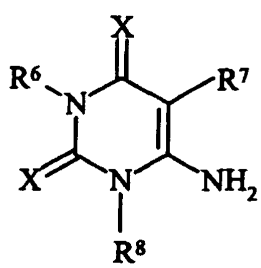

(III),

worin die Reste $R^6$ und $R^7$ die bereits obengenannte Bedeutung haben und der Rest $R^8$ für Wasserstoff, einen gegebenenfalls substituierten linearen oder verzweigten, gesättigten oder ungesättigten aliphatischen Kohlenwasserstoffrest mit 1 bis 44 C-Atomen, einen gegebenenfalls substituierten gesättigten oder ungesättigten cycloaliphatischen Kohlenwasserstoffrest mit 6 bis 44 C-Atomen oder einen gegebenenfalls substituierten aromatischen Kohlenwasserstoffrest mit 6 bis 44 C-Atomen steht.

Die Verbindung gemäß Formel III fallt damit unter die Verbindungen gemäß Formel I, wobei n in der allgemeinen Formel I für I und die Reste $R^1$ und $R^3$ gemäß der allgemeinen Formel I zu dem Strukturelement der allgemeinen Formel IV

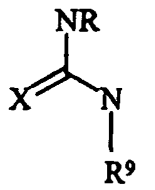

(IV),

verbunden sind, worin X für S oder O steht. $R^1$ steht im Falle einer Verbindung der allgemeinen Formel IV also für $N-R^9$, während $R^3$ für -RN-C=X steht und beide Reste über eine N-C-Bindung kovalent zu einem heterocyclischen Ring verknüpft sind.

Vorzugsweise werden im Rahmen der vorliegenden Erfindung Verbindungen der allgemeinen Formel IV eingesetzt, bei denen $R^9$ für Wasserstoff steht.

Im Rahmen einer weiteren bevorzugten Ausführungsform der vorliegenden Erfindung werden in den erfindungsgemäßen Stabilisatorzusammensetzungen Verbindungen der allgemeinen Formel III eingesetzt, bei denen $R^6$ und $R^8$ für einen linearen oder verzweigten Alkylrest mit 1 bis 6 C-Atomen, beispielsweise Methyl, Ethyl, Propyl, Butyl, Pentyl oder Hexyl, einen mit OH-Gruppen substituierten linearen oder verzweigten Alkylrest mit 1 bis 6 C-Atomen, beispielsweise Hydroxymethyl, Hydroxyethyl, Hydroxypropyl, Hydroxybutyl, Hydroxypentyl oder Hydroxyhexyl, einen Aralkylrest mit 7 bis 9 C-Atomen, beispielsweise Benzyl, Phenylethyl, Phenylpropyl, Dimethylbenzyl oder Phenylisopropyl, wobei die genannten Aralkylreste beispielsweise mit Halogen, Hydroxy oder Methoxy substituiert sein können oder einen Alkenylrest mit 3 bis 6 C-Atomen, beispielsweise Vinyl, Alkyl, Methallyl, 1-Butenyl oder 1-Hexenyl stehen.

Im Rahmen einer bevorzugten Ausführungsform der vorliegenden Erfindung werden in den erfindungsgemäßen Stabilisatorzusammensetzungen Verbindungen mit einem Strukturelement gemäß der allgemeinen Formel III eingesetzt, worin $R^6$ und $R^8$ für Wasserstoff, Methyl, Ethyl, n-Propyl, Isopropyl, n-, i-, sec- oder t-Butyl stehen.

Ebenfalls als Verbindungen der allgemeinen Formel I geeignet sind beispielsweise Verbindungen, in denen die Reste $R^1$ und $R^2$ zu einem aromatischen oder heteroaromatischen System verbunden sind, beispielsweise Aminobenzoesäure, Aminosalicylsäure oder Aminopyridincarbonsäure und deren geeignete Derivate.

Im Rahmen einer bevorzugten Ausführungsform der vorliegenden Erfindung enthält eine erfindungsgemäße Stabilisatorzusammensetzung eine Verbindung mit einem Strukturelement gemäß der allgemeinen Formel I oder ein Gemisch aus zwei oder mehr Verbindungen mit einem Strukturelement gemäß der allgemeinen Formel I, beispielsweise eine Verbindung der allgemeinen Formel III, in einer Menge von etwa 0,1 bis etwa 99,5 Gew.%, insbesondere etwa 5 bis etwa 50 Gew.-% oder etwa 5 bis etwa 25 Gew.-%.

Eine erfindungsgemäße Stabilisatorzusammensetzung kann jeweils einen Aminoalkohol oder ein Gemisch aus zwei oder mehr Aminoalkoholen und ein Salz einer halogenhaltigen Oxysäure oder ein Gemisch aus zwei oder mehr Salzen halogenhaltiger Oxysäuren und eine Verbindung mit einem Strukturelement der allgemeinen Formel I oder ein Gemisch aus zwei oder mehr solcher Verbindungen enthalten.

Es ist bevorzugt, wenn der Anteil an Aminoalkohol oder Aminoalkoholen in der erfindungsgemäßen Stabilisatorzusammensetzung mindestens etwa 30 Gew.-%, vorzugsweise jedoch mehr, beispielsweise mindestens etwa 40 oder mindestens etwa 50 Gew.-% beträgt. Die Obergrenze für den Gehalt an Aminoalkohol oder Aminoalkoholen liegt in solchen Fällen bei etwa 99 Gew.-%. Der Anteil an Salz einer halogenhaltigen Oxysäure oder einem Gemisch aus zwei oder mehr solcher Salzen liegt in diesem Fall bei etwa 20 bis etwa 50 Gew.-%, der Anteil an Verbindungen mit einem Strukturelement gemäß der allgemeinen Formel I liegt in diesem Fall ebenfalls bei etwa 20 bis etwa 50 Gew.-%.

Neben den obengenannten Bestandteilen kann eine erfindungsgemäße Stabilisatorzusammensetzung noch Zusatzstoffe enthalten.

Als Zusatzstoffe eignen sich im Rahmen der vorliegenden Erfindung beispielsweise Verbindungen, die mindestens ein mercaptofunktionelles, $sp^2$-hybridisiertes C-Atom aufweisen. Unter Verbindungen, die mindestens ein mercaptofunktionelles, $sp^2$-hybridisiertes C-Atom aufweisen werden im Rahmen der vorliegenden Erfindung grundsätzlich alle Verbindungen verstanden, die ein Strukturelement Z=CZ-SH oder ein Strukturelement $Z_2C=S$ aufweisen, wobei beide Strukturelemente tautomere Formen einer einzigen Verbindung sein können. Das $sp^2$-hybridisierte C-Atom kann dabei Bestandteil einer gegebenenfalls substituierten aliphatischen Verbindung oder Bestandteil eines aromatischen Systems sein. Geeignete Verbindungstypen sind beispielsweise Thiocarbamidsäurederivate, Thiocarbamate, Thiocarbonsäuren, Thiobenzoesäurederivate, Thioacetonderivate oder Thioharnstoff oder Thioharnstoffderivate. Geeignete Verbindungen mit mindestens einem mercaptofunktionellen, $sp^2$-hybridisierten C-Atom werden beispielsweise in der nicht vorveröffentlichten deutschen Patentanmeldung mit dem Aktenzeichen 101 09 366.7 genannt.

Im Rahmen einer bevorzugten Ausführungsform der vorliegenden Erfindung wird als Verbindung mit mindestens einem mercaptofunktionellen, $sp^2$-hybridisierten C-Atom Thioharnstoff oder ein Thioharnstoffderivat eingesetzt.

Ebenfalls als Zusatzstoffe für die erfindungsgemäßen Stabilisatorzusammensetzungen eignen sich beispielsweise Carbazol oder Carbazolderivate oder Gemische aus zwei oder mehr davon.

Weiterhin als Zusatzstoffe geeignet sind beispielsweise 2,4-Pyrrolidindion oder dessen Derivate, wie sie beispielsweise in der nicht vorveröffentlichten deutschen Patentanmeldung mit dem Aktenzeichen 101 09 366.7 genannt werden.

Als Zusatzstoffe eignen sich weiterhin beispielsweise Epoxyverbindungen. Beispiele für derartige Epoxyverbindungen sind epoxidiertes Sojaöl, epoxidiertes Olivenöl, epoxidiertes Leinöl, epoxidiertes Rizinusöl, epoxidiertes Erdnußöl, epoxidiertes Maisöl, epoxidiertes Baumwollsamenöl sowie Glycidylverbindungen.

Glycidylverbindungen enthalten eine Glycidylgruppe, die direkt an ein Kohlenstoff-, Sauerstoff-, Stickstoff- oder Schwefelatom gebunden ist. Glycidyl- oder Methylglycidylester sind durch Umsetzung einer Verbindung mit mindestens einer Carboxylgruppe im Molekül und Epichlorhydrin bzw. Glyzerindichlorhydrin bzw. Methyl-epichlorhydrin erhältlich. Die Umsetzung erfolgt zweckmäßigerweise in Gegenwart von Basen.

Als Verbindungen mit mindestens einer Carboxylgruppe im Molekül können beispielsweise aliphatische Carbonsäuren eingesetzt werden. Beispiele für diese Carbonsäuren sind Glutarsäure, Adipinsäure, Pimelinsäure, Korksäure, Azelainsäure, Sebacinsäure oder dimerisierte oder trimerisierte Linolsäure, Acrylsäure, Methacrylsäure, Capronsäure, Caprylsäure, Laurinsäure, Myristinsäure, Palmitinsäure, Stearinsäure oder Pelargonsäure sowie die im weiteren Verlauf dieses Textes erwähnten Mono- oder Polycarbonsäuren. Ebenfalls geeignet sind cycloaliphatischen Carbonsäuren wie Cyclohexancarbonsäure, Tetrahydrophthalsäure, 4-Methyltetrahydrophthalsäure, Hexahydrophthalsäure, Endomethylentetrahydrophthalsäure oder 4-Methylhexahydrophthalsäure. Weiterhin geeignet sind aromatische Carbonsäuren wie Benzoesäure, Phthalsäure, Isophthalsäure, Trimellithsäure oder Pyromellithsäure.

Glycidylether oder Methylglycidylether lassen sich durch Umsetzung einer Verbindung mit mindestens einer freien alkoholischen OH-Gruppe oder einer phenolischen OH-Gruppe und einem geeignet substituierten Epichlorhydrin unter alkalischen Bedingungen oder in Anwesenheit eines sauren Katalysators und anschließender Alkalibehandlung erhalten. Ether dieses Typs leiten sich beispielsweise von acyclischen Alkoholen wie Ethylenglykol, Diethylenglykol oder höheren Poly(oxyethylen)glykolen, Propan-1,2-diol oder Poly(oxypropylen)glykolen, Butan-1,4-diol, Poly(oxyteramethylen)glykolen, Pentan-1,5-diol, Hexan-1,6-diol, Hexan-2,4,6-triol, Glyzerin, 1,1,1-Trimethylolpropan, BisTrimethylolpropan, Pentaerythrit, Sorbit sowie von Polyepichlorhydrinen, Butanol, Amylalkohol, Pentanol sowie von monofunktionellen Alkoholen wie Isooctanol, 2-Ethylhexanol, Isodecanol oder technischen Alkoholgemischen, beispielsweise technischen Fettalkoholgemischen, ab.

Geeignete Ether leiten sich auch von cycloaliphatischen Alkoholen wie 1,3- oder 1,4-Dihydroxycyclohexan, Bis(4-hydroxycyclohexyl)methan, 2,2-Bis(4-hydroxycyclohexyl)propan oder 1,1-Bis-(hydroxymethyl)cyclohexan-3-en ab oder sie besitzen aromatische Kerne wie N,N-Bis-(2-hydroxyethyl)anilin. Geeignete Epoxyverbindungen können sich auch von einkernigen Phenolen ableiten, beispielsweise von Phenol, Resorcin oder Hydrochinon, oder sie basieren auf mehrkernigen Phenolen wie Bis(4-hydroxyphenyl)methan, 2,2-Bis (4-hydroxyphenyl)propan, 2,2-Bis(3,5-dibrom-4-hydroxyphenyl)propan, 4,4'-Dihydroxydiphenylsulfonen oder auf unter sauren Bedingungen erhaltenen Kondensationsprodukten von Phenol mit Formaldehyd, beispielsweise Phenol-Novolaken.

Weitere im Rahmen der vorliegenden Erfindung als Zusatzstoffe geeignete, endständige Epoxide sind beispielsweise Glycidyl-1-naphthylether, Glycidyl-2-phenylphenylether, 2-Diphenylglycidylether, N-(2,3-Epoxypropyl) phthalimid oder 2,3-Epoxypropyl-4-methoxyphenylether.

Ebenfalls geeignet sind N-Glycidylverbindungen, wie sie durch Dehydrochlorierung der Redaktionsprodukte von Epichlorhydrin mit Aminen, die mindestens ein Aminowasserstoffatom enthalten, erhältlich sind. Solche Amine sind beispielsweise Anilin, N-Methylanilin, Toluidin, n-Butylamin, Bis(4-aminophenyl)methan, m-Xylylendiamin oder Bis(4-methylaminophenyl)methan.

Ebenfalls geeignet sind S-Glycidylverbindungen, beispielsweise Di-S-glycidyletherderivate, die sich von Dithiolen wie Ethan-1,2-dithiol oder Bis(4-mercaptomethylphenyl)ether ableiten.

Besonders geeignete Epoxyverbindungen sind beispielsweise in der EP-A 1 046 668 auf den Seiten 3 bis 5 beschrieben, wobei auf die dort enthaltene Offenbarung ausdrücklich Bezug genommen wird und diese als Bestandteil der Offenbarung des vorliegenden Textes betrachtet wird.

Weiterhin als Zusatzstoffe im Rahmen der vorliegenden Erfindung geeignet sind 1,3-Dicarbonylverbindungen, insbesondere die β-Diketone und β-Ketoester. Im Rahmen der vorliegenden Erfindung geeignet sind Dicarbonylverbindungen der allgemeinen Formel R C(O)CHR'' -C(O)R''', wie sie beispielsweise auf S. 5 der EP- 1 046 668 beschrieben sind, auf die insbesondere im Hinblick auf die Reste R', R'' und R''' ausdrücklich bezug genommen wird und deren Offenbarung als Bestandteil der Offenbarung des vorliegenden Textes betrachtet wird. Besonders geeignet sind hierbei beispielsweise Acetylaceton, Butanoylaceton, Heptanoylaceton, Stearoylaceton, Palmitoylaceton, Lauroylaceton, 7-tert-Nonylthioheptandion-2,4, Benzoylaceton, Dibenzoylmethan, Lauroylbenzoylmethan, Palmitoylbenzoylmethan, Stearoylbenzoylmethan, Isooctylbenzoylmethan, 5-Hydroxycapronylbenzoylmethan, Tribenzoylmethan, Bis(4-methylbenzoyl)methan, Benzoylp-chlorbenzoylmethan, Bis(2-hydroxybenzoyl)methan, 4-Methoxybenzoylbenzoylmethan, Bis(4-methoxybenzoyl)methan, Benzoylformylmethan, Benzoylacetylphenylmethan, 1-Benzoyl-1-acetylnonan, Stearoyl-4-methoxybenzoylmethan, Bis(4-tert-butylbenzoyl)methan, Benzoylphenylacetylmethan, Bis(cyclohexanoyl)methan, Dipivaloylmethan, 2-Acetylcyclopentanon, 2-Benzoylcyclopentanon, Diacetessigsäuremethyl-, -ethyl-, -butyl-, 2-ethylhexyl-, -dodecyl- oder -octadecylester sowie Propionyl- oder Butyrylessigsäureester mit 1 bis 18 C-Atomen sowie Stearoylessigsäureethyl-, -propyl-, -butyl-, hexyl- oder -octylester oder mehrkernige β-Ketoester wie sie in der EP-A 433 230 beschrieben sind, auf die ausdrücklich bezug genommen wird, oder Dehydracetsäure sowie deren Zink-, magnesium- oder Alkalisalze oder die Alkali- Erdalkali- oder Zinkchelate der genannten Verbindungen, sofern diese existieren.

1,3-Diketoverbindungen können in einer erfindungsgemäßen Stabilisatorzusammensetzung in einer Menge von bis zu etwa 20 Gew.-%, beispielsweise bis zu etwa 10 Gew.-%, enthalten sein.

Weiterhin als Zusatzstoffe im Rahmen der erfindungsgemäßen Stabilisatorzusammensetzung geeignet sind Polyole. Geeignete Polyole sind beispielsweise Pentaerythrit, Dipentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Tris-(hydroxymethyl)isocyanurat, Palatinit, Tetramethylolcyclohexanol, Tetramethylolcyclopentanol, Tetramethylolcycloheptanol, Glyzerin, Diglyzerin, Polyglyzerin, Thiodiglyzerin oder 1-0-α-D-Glycopyranosyl-D-mannit-dihydrat.

Die als Zusatzstoffe geeigneten Polyole können in einer erfindungsgemäßen Stabilisatorzusammensetzung in einer Menge von bis zu etwa 30 Gew.-%, beispielsweise bis zu etwa 10 Gew.-% enthalten sein.

Ebenfalls als Zusatzstoffe geeignet sind beispielsweise sterisch gehinderte Amine wie sie in der EP-A 1 046 668 auf den Seiten 7 bis 27 genannt werden. Auf die dort offenbarten sterisch gehinderten Amine wird ausdrücklich Bezug genommen, die dort genannten Verbindungen werden als Bestandteil der Offenbarung des vorliegenden Textes betrachtet.

Die als Zusatzstoffe geeigneten sterisch gehinderten Amine können in einer erfindungsgemäßen Stabilisatorzusammensetzung in einer Menge von bis zu etwa 30 Gew.-%, beispielsweise bis zu etwa 10 Gew.-% enthalten sein.

Weiterhin als Zusatzstoffe in den erfindungsgemäßen Stabilisatorzusammensetzungen geeignet sind Hydrotalcite, Zeolithe und Alkalialumocarbonate. Geeignete Hydrotalcite, Zeolithe und Alkalialumocarbonate sind beispielsweise in der EP-A 1 046 668 auf den Seiten 27 bis 29, der EP-A 256 872 auf den Seiten 3, 5 und 7, der DE-C 41 06 411 auf Seite 2 und 3 oder der DE-C 41 06 404 auf Seite 2 und 3 beschrieben. Auf diese Druckschriften wird ausdrücklich bezug genommen und deren Offenbarung an den angegebenen Stellen wird als Bestandteil der Offenbarung des vorliegenden Textes betrachtet.

Die als Zusatzstoffe geeigneten Hydrotalcite, Zeolithe und Alkalialumocarbonate können in einer erfindungsgemäßen Stabilisatorzusammensetzung in einer Menge von bis zu etwa 50 Gew.-%, beispielsweise bis zu etwa 30 Gew.-% enthalten sein.

Ebenfalls im Rahmen der erfindungsgemäßen Stabilisatorzusammensetzungen als Zusatzstoffe geeignet sind beispielsweise Hydrocalumite der allgemeinen Formel V

$$M^{2+}{}_{(2+x)}Al^{3+}{}_{(1+y)}(OH)_{(6+z)}A^{j-}{}_{a}[B_r]^{nl}{}_{b}*m\ H_2O \qquad (V),$$

worin M für Calcium, Magnesium oder Zink oder Gemische aus zwei oder mehr davon, A für ein j-wertiges anorganisches oder organisches Säureanion, j für 1, 2 oder 3, B für ein von A verschiedenes anorganisches oder organisches Säureanion steht, r für eine ganze Zahl ≥ 1 steht und, sofern r >1 ist, den Polymerisationsgrad des Säureanions angibt und 1 für 1, 2 3 oder 4 steht und die Wertigkeit des Säureanions angibt, wobei für r = 11 für 2, 3 oder 4 steht und für r > 11 die Wertigkeit der einzelnen Monomereinheiten des Polyanions angibt und für 1, 2, 3 oder 4 steht und rl die Gesamtwertigkeit des Polyanions angibt und die folgenden Regeln für die Parameter x, y, a, b, r, z, und j gelten:

$$0 \leq x < 0,6,$$

$$0 \leq y \leq 0,4,$$

wobei entweder x = 0 oder y = 0,

$$0 < a < 0,8/r$$

und

$$z = 1 + 2x + 3y - ja - r/b.$$

Im Rahmen einer bevorzugten Ausführungsform der vorliegenden Erfindung werden als Zusatzstoffe Verbindungen der allgemeinen Formel V eingesetzt, worin M für Calcium steht, das gegebenenfalls im Gemisch mit Magnesium oder Zink oder Magnesium und Zink vorliegen kann.

In der allgemeinen Formel V steht A für ein r-wertiges anorganisches oder organisches Säureanion, wobei r für 1, 2 oder 3 steht. Beispiele für im Rahmen von erfindungsgemäß einsetzbaren Hydrocalumiten vorliegende Säureanionen sind Halogenidionen, $SO_3^{2-}$, $SO_4^{2-}$, $S_2O_3^{2-}$, $S_2O_4^{2-}$, $HPO_3^{2-}$, $PO_4^{3-}$, $CO_3^{2-}$, Alkyl- und Dialkylphosphate, Alkylmercaptide und Alkylsulfonate, worin die Alkylgruppen gleich oder verschieden, geradkettig, verzweigt oder cyclisch sein können und vorzugsweise 1 bis etwa 20 C-Atome aufweisen. Ebenfalls als Säureanionen A geeignet sind die Anionen gegebenenfalls funktionalisierter Di-, Tri- oder Tetracarbonsäuren wie Maleat, Phthalat, Aconitat, Trimesinat, Pyromellitat, Maleat, Tartrat, Citrat sowie Anionen der isomeren Formen der Hydroxyphthalsäure oder der Hydroxymesinsäure. Im Rahmen einer bevorzugten Ausführungsform der vorliegenden Erfindung steht A für ein anorganisches Säureanionen, insbesondere ein Halogenidion, beispielsweise $F^-$, $Cl^-$ oder $Br^-$, vorzugsweise für $Cl^-$.

In der allgemeinen Formel V steht B für ein Säureanion, das von A verschieden ist. Für den Fall, dass in der allgemeinen Formel V r für die Zahl 1, steht, steht Buchstabe B für ein 1-wertiges, anorganisches oder organisches Säureanion, wobei 1 für die Zahl 2, 3 oder 4 steht. Beispiele für im Rahmen von erfindungsgemäß einsetzbaren Verbindungen der allgemeinen Formel V vorliegende Säureanionen B sind beispielsweise $O^{2-}$, $SO_3^{2-}$, $SO_4^{2-}$, $S_2O3^{2-}$, $S_2O_4^{2-}$, $HPO_3^{2-}$, $PO_4^{3-}$, $CO_3^{2-}$, Alkyl- und Dialkylphosphate, Alkylmercaptide und Alkylsulfonate, worin die Alkylgruppen, gleich oder verschieden, geradkettig oder verzweigt oder cyclisch sein können und vorzugsweise 1 bis etwa 20 C-Atome aufweisen. Ebenfalls als Säureanionen A geeignet sind die Anionen gegebenenfalls funktionalisierter Di-, Tri- oder Tetracarbonsäuren wie Maleat, Phthalat, Aconitat, Trimesinat, Pyromellitat, Maleat, Tartrat, Citrat sowie Anionen der isomeren Formen der Hydroxyphthalsäure oder der Hydroxymesinsäure. Vorzugsweise steht B im Rahmen der vorliegenden Erfindung in Formel V für ein Borat oder ein Anion einer gegebenenfalls funktionalisierte Di-, Tri- oder Tetracarbonsäure. Besonders bevorzugt sind dabei Carbonsäureanionen und Anionen von Hydroxycarbonsäuren mit mindestens zwei Carboxylgruppen, wobei Citrate ganz besonders bevorzugt sind.

Für den Fall dass r in der allgemeinen Formel V für eine Zahl von mehr als 1 steht, steht der Term $[B_r]^{r1-}$ für ein anorganisches oder organisches Polyanion mit dem Polymerisationsgrad r und der Wertigkeit 1 der einzelnen Monomereinheiten des Polyanions mit der Gesamtwertigkeit r1, wobei 1 gleich oder größer als 1 ist. Beispiele für geeignete Polyanionen $[B_r]^{r1-}$ sind Polyacrylate, Polycarboxylate, Polyborate, Polysilikate, Polyphosphate oder Polyphosphonate.

In allen obengenannten Fällen können die Säureanionen A und B in einem beliebigen Verhältnis a/b in den Verbindungen der allgemeinen Formel V enthalten sein.

Bei den Verbindungen der allgemeinen Formel V handelt es sich nicht um schichtartig aufgebaute Verbindungen vom Hydrotalcit- bzw. Hydrocalumittyp, sondern um eine physikalische Mischung von $M^{2+}$/Aluminiumoxidhydraten mit Salzen zweiwertiger Metalle. Röntgendiffraktogramme der in der erfindungsgemäßen Zusammensetzung eingesetzten Verbindungen der allgemeinen Formel V zeigen eindeutig, dass es sich nicht um diskrete kristalline Verbindungen eines bekannten Typs sondern um röntgenamorphe Mischungen handelt.

Zur Herstellung der Verbindungen gemäß der allgemeinen Formel V können, bekannten Verfahren folgend, Lösungen bzw. Suspensionen oxidischer Formen der gewünschten Kationen (z.B. $NaAlO_2$, $Ca(OH)_2$, $Zn(OH)_2$, $Al(OH)_3$) mit Lösungen oder Suspension von Salzen oder den entsprechenden Säuren der gewünschten Anionen gemischt und bei Temperaturen zwischen 40 und 95 °C zur Reaktion gebracht werden. Dabei können die Reaktionszeiten zwischen 15 und 300 Minuten variiert werden.

Wenn eine Oberflächenbehandlung der Reaktionsprodukte gewünscht ist, können die Reaktionsprodukte direkt mit dem Oberflächenbehandlungsmittel versetzt, das Produkt durch Filtration von der Mutterlauge getrennt und bei geeigneten Temperaturen zwischen 100 und 250 °C getrocknet werden. Die zugesetzte Menge an Oberflächenbehandlungsmittel beträgt beispielsweise etwa 1 bis etwa 20 Gew.-%.

Verbindungen der allgemeinen Formel V können im Rahmen der erfindungsgemäßen Stabilisatorzusammensetzungen in einer Menge von bis zu etwa 50 Gew.-%, beispielsweise bis zu etwa 30 oder bis zu etwa 15 Gew.-% eingesetzt werden.

Im Rahmen einer weiteren Ausführungsform der vorliegenden Erfindung enthält eine erfindungsgemäße Stabilisatorzusammensetzung mindestens ein basisches Calciumsalz. Als basische Calciumsalze geeignet sind beispielsweise Calciumoxid, Calciumhydroxid oder Calciumcarbonat. Die basischen Calciumsalze können gegebenenfalls oberflächenmodifiziert sein.

Ebenfalls als Zusatzstoffe zu den erfindungsgemäßen Stabilisatorzusammensetzung geeignet sind Metalloxide, Metallhydroxide und Metallseifen von gesättigten, ungesättigten, geradkettigen oder verzweigten, aromatischen, cycloaliphatischen oder aliphatischen Carbonsäuren oder Hydroxycarbonsäuren mit vorzugsweise etwa 2 bis etwa 22

C-Atomen.

Als Metallkationen weisen die als Zusatzstoffe geeigneten Metalloxide, Metallhydroxide oder Metallseifen vorzugsweise ein zweiwertiges Kation auf, besonders geeignet sind die Kationen von Calcium oder Zink oder deren Gemische, im Rahmen einer bevorzugten Ausführungsform der vorliegenden Erfindung sind die erfindungsgemäßen Stabilisatorzusammensetzungen jedoch frei von Zink.

Beispiele für geeignete Carbonsäureanionen umfassen Anionen von monovalenten Carbonsäuren wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Laurylsäure, Isostearinsäure, Stearinsäure, 12-Hydroxystearinsäure, 9,10-Dihydroxystearinsäure, Ölsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsatlicylsaure, Sorbinsäure, Anionen von divalenten Carbonsäuren bzw. deren Monoestern wie Oxalsäure, Malonsäure, Maleinsäure, Weinsäure, Zimtsäure, Mandelsäure, Äpfelsäure, Glykolsäure, Oxalsäure, Salicylsäure, Polyglykoldicarbonsäuren mit einem Polymerisationsgrad von etwa 10 bis etwa 12, Phthalsäure, Isophthalsäure, Terephthalsäure oder Hydroxyphthalsäure, Anionen von tri- oder tetravalenten Carbonsäuren bzw. deren Mono-, Di- oder Triestern wie sie in Hemimellithsäure, Trimellithsäure, Pyromellithsäure oder Zitronensäure sowie ferner sogenannte überbasische Carboxylate wie sie beispielsweise in der DE-A 41 06 404 oder der DE-A 40 02 988 beschrieben werden, wobei die Offenbarung der letztgenannten Dokumente als Bestandteil der Offenbarung des vorliegenden Textes betrachtet wird.

Im Rahmen einer bevorzugten Ausführungsform der vorliegenden Erfindung werden vorzugsweise Metallseifen eingesetzt, deren Anionen sich von gesättigten oder ungesättigten Carbonsäuren oder Hydroxycarbonsäuren mit etwa 8 bis etwa 20 C-Atomen ableiten. Besonders bevorzugt sind hierbei Stearate, Oleate, Laurate, Palmitate, Behenate, Versatate, Hydroxystearate, Dihydroxystearate, p-tert-Butylbenzoate oder (Iso)Octanoate von Calcium oder Zink oder Gemische aus zwei oder mehr davon. Im Rahmen einer weiteren bevorzugten Ausführungsform der vorliegenden Erfindung weist eine erfindungsgemäße Stabilisatorzusammensetzung Calciumstearat oder Zinkstearat oder deren Gemisch auf.

Eine erfindungsgemäße Stabilisatorzusammensetzung kann die genannten Metalloxide, Metallhydroxide oder Metallseifen oder ein Gemisch aus zwei oder mehr davon, in einer Menge von bis zu etwa 50 Gew.-%, beispielsweise in einer Menge von bis etwa 30 Gew.-%, enthalten.

Eine erfindungsgemäße Stabilisatorzusammensetzung kann darüber hinaus weiterhin als Thermostabilisatorkomponente eine Organozinnverbindung oder ein Gemisch aus zwei oder mehr Organozinnverbindungen enthalten. Geeignete Organozinnverbindungen sind beispielsweise Methylzinn-tris-(isooctyl-thioglycolat), Methylzinn-tris-(isooctyl-3-mercaptopropionat), Methylzinn-tris-(isodecyl-thioglycolat), Dimethylzinn-bis-(isooctyl-thioglycolat), Dibutylzinn-bis-(isooctyl-thioglycolat), Monobutylzinn-tris-(isooctyl-thioglycolat), Dioctylzinn-bis-(isooctyl-thioglycolat), Monooctylzinn-tris-(isooctyl-thioglycolat) oder Dimethylzinn-bis-(2-ethylhexyl-β-mercaptopropionat).

Darüber hinaus sind im Rahmen der erfindungsgemäßen Stabilisatorzusammensetzungen die in der EP-A 0 742 259 auf den Seiten bis 18 bis 29 genannten und in ihrer Herstellung beschriebenen Organozinnverbindungen einsetzbar. Auf die obengenannte Offenbarung wird ausdrücklich Bezug genommen, wobei die dort genannten Verbindungen und deren Herstellung als Bestandteil der Offenbarung des vorliegenden Textes verstanden werden.

Eine erfindungsgemäße Stabilisatorzusammensetzung kann die beschriebenen Organozinnverbindungen in einer Menge von bis zu etwa 20 Gew.-%, insbesondere bis etwa 10 Gew.-%, enthalten.

Im Rahmen einer weiteren Ausführungsform der vorliegenden Erfindung kann eine erfindungsgemäße Stabilisatorzusammensetzung organische Phosphitester mit 1 bis 3 identischen, paarweise identischen oder unterschiedlichen organischen Resten enthalten. Geeignete organische Reste sind beispielsweise lineare oder verzweigte, gesättigte oder ungesättigte Alkylreste mit 1 bis 24 C-Atomen, gegebenenfalls substituierten Alkylreste mit 6 bis 20 C-Atomen oder gegebenenfalls substituierte Aralkylreste mit 7 bis 20 C-Atomen. Beispiele für geeignete organische Phosphitester sind Tris-(nonylphenyl)-, Trilauryl-, Tributyl-, Trioctyl-, Tridecyl-, Tridodecyl-, Triphenyl-, Octyldiphenyl-, Dioctylphenyl-, Tri-(Octylphenyl)-, Tribenzyl-, Butyldikresyl-, Octyl-di(octylphenyl)-, Tris-(2-ethylhexyl)-, Tritolyl-, Tris-(2-cyclohexylphenyl)-, Tri-α-naphthyl-, Tris-(phenylphenyl)-, Tris-(2-phenylethyl)-, Tris-(dimethylphenyl)-, Trikresyl- oder Tris-(p-nonylphenyl)-phosphit oder Tristearyl-sorbit-triphosphit oder Gemische aus zwei oder mehr davon.

Eine erfindungsgemäße Stabilisatorzusammensetzung kann die beschriebenen Phosphitverbindungen in einer Menge von bis zu etwa 30 Gew.-%, insbesondere bis etwa 10 Gew.-%, enthalten.

Eine erfindungsgemäße Stabilisatorzusammensetzung kann weiterhin als Zusatzstoffe blockierte Mercaptane enthalten, wie sie in der EP-A 0 742 259 auf den Seiten 4 bis 18 genannt werden. Auf die Offenbarung in der angegebenen Schrift wird ausdrücklich Bezug genommen, sie wird als Bestandteil der Offenbarung des vorliegenden Textes verstanden.

Eine erfindungsgemäße Stabilisatorzusammensetzung kann die beschriebenen blockierten Mercaptane in einer Menge von bis zu etwa 30 Gew.-%, insbesondere bis zu etwa 10 Gew.-%, enthalten.

Eine erfindungsgemäße Stabilisatorzusammensetzung kann weiterhin Gleitmittel wie Paraffinwachse, Polyethylenwachse, Polypropylenwachse, Montanwachse, Estergleitmittel wie Fettsäureester, gereinigte oder hydrierte natürliche oder synthetische Triglyceride oder Partialester, Amidwachse, Chlorparaffine, Glyzerinester oder Erdalkaliseifen enthalten. Verwendbare Gleitmittel werden darüber hinaus auch in "Kunststoffadditive", R. Gächter/H. Müller, Carl Hanser Verlag, 3. Auflage, 1989, S. 478 - 488 beschrieben. Weiterhin als Gleitmittel geeignet sind beispielsweise Fettketone wie sie in der DE 4,204,887 beschrieben werden sowie Gleitmittel auf Silikonbasis, wie sie beispielsweise die EP-A 0 259 783 nennt, oder Kombinationen davon, wie sie in der EP-A 0 259 783 genannt werden. Auf die genannten Dokumente wird hiermit ausdrücklich Bezug genommen, deren Gleitmittel betreffende Offenbarung wird als Bestandteil der Offenbarung des vorliegenden Textes betrachtet. Besonders geeignet sind im Rahmen der vorliegenden Erfindung Gleitmittel der Produktreihe Baerolub® der Firma Baerlocher GmbH (Unterschleißheim, Deutschland).

Eine erfindungsgemäße Stabilisatorzusammensetzung kann die beschriebenen Gleitmittel in einer Menge von bis zu etwa 70 Gew.-%, insbesondere bis etwa 40 Gew.-%, enthalten.

Ebenfalls als Zusatzstoffe für Stabilisatorzusammensetzungen gemäß der vorliegenden Erfindung geeignet sind organische Weichmacher.

Als Weichmacher geeignet sind beispielsweise Verbindungen aus der Gruppe der Phthalsäureester wie Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Dicyclohexyl-, Di-methylcyclohexyl-, Dimethylglykol-, Dibutylglykol-, Benzylbutyl- oder Diphenylphthalat sowie Gemische von Phthalaten, beispielsweise Gemische von Alkylphthalaten mit 7 bis 9 oder 9 bis 11 C-Atomen im Esteralkohol oder Gemische von Alkylphthalaten mit 6 bis 10 und 8 bis 10 C-Atomen im Esteralkohol. Besonders im Sinne der vorliegenden Erfindung geeignet sind dabei Dibutyl-, Dihexyl-, Di-2-ethylhexyl-, Di-n-octyl-, Di-iso-octyl-, Di-iso-nonyl-, Di-iso-decyl-, Di-isotridecyl- und Benzylbutylphthalat sowie die genannten Mischungen von Alkylphthalaten.

Weiterhin als Weichmacher geeignet sind die Ester aliphatischer Dicarbonsäuren, insbesondere die Ester von Adipin-, Azelain- oder Sebacinsäure oder Gemische aus zwei oder mehr davon. Beispiele für derartige Weichmacher sind Di-2-ethylhexyladipat, Diisooctyladipat, Di-iso-nonyladipat, Di-iso-decyladipat, Benzylbutyladipat, Benzyloctyladipat, Di-2-ethylhexylazelat, Di-2-ethylhexylsebacat und Di-iso-decylsebacat. Bevorzugt sind im Rahmen einer weiteren Ausführungsform der vorliegenden Erfindung Di-2-ethylhexylacetat und Di-iso-octyladipat.

Ebenfalls als Weichmacher geeignet sind Trimellithsäureester wie Tri-2-ethylhexyltrimellithat,Tri-iso-tridecyltrimellithat, Tri-iso-octyltrimellithat sowie Trimellithsäureester mit 6 bis 8, 6 bis 10, 7 bis 9 oder 9 bis 11 C-Atomen in der Estergruppe oder Gemische aus zwei oder mehr der genannten Verbindungen.

Weiterhin geeignete Weichmacher sind beispielsweise Polymerweichmacher, wie sie in "Kunststoffadditive", R. Gächter/H. Müller, Carl Hanser Verlag, 3. Auflage, 1989, Kapitel 5.9.6, Seiten 412-415, oder "PVC Technology", W. V. Titow, 4th Edition, Elsevier Publishers, 1984, Seiten 165-170, angegeben sind. Die gebräuchlichsten Ausgangsmaterialien für die Herstellung von Polyesterweichmachem sind beispielsweise Dicarbonsäuren wie Adipin-, Phthal-, Azelain- oder Sebacinsäure sowie Diole wie 1,2-Propandiol, 1,3-Butandiol, 1,4-Butandiol, 1,6-Hexandiol, Neopentylglykol oder Diethylenglykol oder Gemische aus zwei oder mehr davon.

Ebenfalls als Weichmacher geeignet sind Phosphorsäureester, wie sie im "Taschenbuch der Kunststoffadditive", Kapitel 5.9.5, S. 408-412 zu finden sind. Beispiele für geeignete Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Triphenylphosphat, Trikresylphosphat oder Trixylenylphosphat, oder Gemische aus zwei oder mehr davon.

Weiterhin als Weichmacher geeignet sind chlorierte Kohlenwasserstoffe (Paraffine) oder Kohlenwasserstoffe wie sie in "Kunststoffadditive", R. Gächter/H. Müller, Carl Hanser Verlag, 3. Auflage, 1989, Kapitel 5.9.14.2, S. 422-425 und Kapitel 5.9.14.1, S. 422, beschrieben sind.

Eine erfindungsgemäße Stabilisatorzusammensetzung kann die beschriebenen Weichmacher in einer Menge von bis zu etwa 99,5 Gew.-%, insbesondere bis zu etwa 30 Gew.-%, bis zu etwa 20 Gew.-% oder bis zu etwa 10 Gew.-% enthalten. Im Rahmen einer bevorzugten Ausführungsform der vorliegenden Erfindung beträgt die Untergrenze für die beschriebenen Weichmacher als Bestandteil der erfindungsgemäßen Stabilisatorzusammensetzungen etwa 0,1 Gew.-% oder mehr, beispielsweise etwa 0,5 Gew.-%, 1 Gew.-%, 2 Gew.-% oder 5 Gew.-%.

Ebenfalls als Bestandteil der erfindungsgemäßen Stabilisatorzusammensetzungen geeignet sind Pigmente. Beispiele für geeignete anorganische Pigmente sind Titandioxid, Ruß, $Fe_2O_3$, $Sb_2O_3$, $(Ba, Sb)O_2$, $Cr_2O_3$, Spinelle wie Kobaltblau und Kobaltgrün, Cd (S, Se) oder Ultramarinblau. Als organische Pigmente sind beispielsweise Azopigmente, Phthalocyaninpigmente, Chinacridonpigmente, Perylenpigmente, Diketopyrrolopyrrolpigmente oder Anthachinonpigmente geeignet.

Eine erfindungsgemäße Stabilisatorzusammensetzung kann weiterhin Füllstoffe wie sie im "Handbook of PVC Formulating", E. J. Wickson, John Wiley & Sons, Inc., 1993, auf den Seiten 393-449 beschrieben sind oder Verstärkungsmittel wie sie im "Taschenbuch der Kunststoffadditive", R. Gächter/H. Müller, Carl Hanser Verlag, 1990, Seiten 549-615 beschrieben sind, enthalten. Besonders geeignete Füllstoffe oder Verstärkungsmittel sind beispielsweise Calciumcarbonat (Kreide), Dolomit, Wollastonit, Magnesiumoxid, Magnesiumhydroxid, Silikate, Glasfasern, Talk, Kaolin, Kreide, Ruß oder Graphit, Holzmehl oder andere nachwachsende Rohstoffe. Im Rahmen einer bevorzugten Ausführungsform der vorliegenden Erfindung enthält eine erfindungsgemäße Stabilisatorzusammensetzung Kreide.

Im Rahmen einer weiteren Ausführungsform der vorliegenden Erfindung können die erfindungsgemäßen Stabilisatorzusammensetzungen Antioxidantien, W-Absorber und Lichtschutzmittel oder Treibmittel enthalten. Geeignete Antioxidantien sind beispielsweise in der EP-A 1 046 668 auf den Seiten 33 bis 35 beschrieben. Bevorzugt werden im Rahmen der vorliegenden Erfindung als Antioxidantien die Produkte der Irganox®-Reihe (Hersteller: Ciba Specialty Chemicals), beispielsweise Irganox® 1010 oder 1076 oder Produkte der Lowinox-Reihe der Fa. Great Lakes eingesetzt.

Geeignete UV-Absorber und Lichtschutzmittel werden in der EP-A 1 046 668 auf den Seiten 35 und 36 genannt. Auf beide Offenbarungen wird hier ausdrücklich Bezug genommen, wobei die Offenbarungen als Bestandteil des vorliegenden Textes betrachtet werden.

Als Treibmittel eignen sich beispielsweise organische Azo- und Hydrazoverbindungen, Tetrazole, Oxazine, Isatosäureanhydrid, Salze der Citronensäure, beispielsweise Ammoniumcitrat, sowie Soda und Natriumbicarbonat. Besonders geeignet sind beispielsweise Ammoniumcitrat, Azodicarbonamid oder Natriumbicarbonat oder Gemische aus zwei oder mehr davon.

Eine erfindungsgemäße Stabilisatorzusammensetzung kann darüber hinaus noch Schlagzähmodifikatoren und Verarbeitungshilfen, Geliermittel, Antistatika, Biozide, Metalldesaktivatoren, optische Aufheller, Flammschutzmittel sowie Antifoggingverbindungen enthalten. Geeignete Verbindungen dieser Verbindungsklassen sind beispielsweise in "Kunststoff Additive", R. Keßler/H. Müller, Carl Hanser Verlag, 3. Auflage, 1989 sowie im "Handbook of PVC Formulating", E.J. Wilson, J. Wiley & Sons, 1993 beschrieben.

Die erfindungsgemäßen Stabilisatorzusammensetzungen eignen sich zur Stabilisierung halogenhaltiger Polymerer.

Beispiele für derartige halogenhaltige Polymere sind Polymere des Vinylchlorids, Vinylharze die Vinylchlorideinheiten im Polymerrückgrat enthalten, Copolymere von Vinylchlorid und Vinylestern aliphatischer Säuren, insbesondere Vinylacetat, Copolymere von Vinylchlorid mit Estern der Acryl- und Methacrylsäure oder Acrylnitril oder Gemischen aus zwei oder mehr davon, Copolymere des Vinylchlorids mit Dienverbindungen oder ungesättigten Dicarbonsäuren oder deren Anhydriden, beispielsweise Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether und dergleichen, Polymere und Copolymere des Vinylidenchlorids mit Vinylchlorid und anderen polymerisierbaren Verbindungen, wie sie bereits oben genannt wurden, Polymere des Vinylchloracetats und Dichlordivinylethers, chlorierte Polymere des Vinylacetats, chlorierte polymere Ester der Acrylsäure und der $\alpha$-substituierten Acrylsäuren, chlorierte Polystyrole, beispielsweise Polydichlorstyrol, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der obengenannten Polymere enthalten. Im Rahmen einer bevorzugten Ausführungsform der vorliegenden Erfindung werden die erfindungsgemäßen Stabilisatorzusammensetzungen zur Herstellung von Formteilen aus PVC-U wie Fensterprofilen, technischen Profilen, Rohren und Platten eingesetzt.

Ebenfalls zur Stabilisierung mit den erfindungsgemäßen Stabilisatorzusammensetzungen geeignet sind die Pfropfpolymerisate von PVC mit EVA, ABS oder MBS. Bevorzugte Substrate für derartige Propfcopolymere sind außerdem die vorstehend genannten Homo- und Copolymerisate, insbesondere Mischungen von Vinylchlorid-Homopolymerisaten mit anderen thermoplastischen oder elastomeren Polymeren, insbesondere Blends mit ABS, MBS, NBR, SAN, EVA, CPE; MBAS, PAA (Polyalkylacrylat), PAMA (Polyalkylmethacrylat), EPDM, Polyamiden oder Polylactonen.

Ebenfalls zur Stabilisierung mit den erfindungsgemäßen Stabilisatorzusammensetzungen geeignet sind Gemische von halogenierten und nicht-halogenierten Polymeren, beispielsweise Gemische der obengenannten nicht-halogenierten Polymeren mit PVC, insbesondere Gemische von Polyurethanen und PVC.

Weiterhin können mit den erfindungsgemäßen Stabilisatorzusammensetzungen auch Rezyklate chlorhaltiger Polymere stabilisiert werden, wobei grundsätzlich alle Rezyklate der obengenannten, halogenierten Polymeren hierzu geeignet sind. Geeignet ist im Rahmen der vorliegenden Erfindung beispielsweise PVC-Rezyklat.

Ein weiterer Gegenstand der vorliegenden Erfindung betrifft daher eine Polymerzusammensetzung, mindestens enthaltend ein halogeniertes Polymeres und eine erfindungsgemäße Stabilisatorzusammensetzung.

Im Rahmen einer bevorzugten Ausführungsform der vorliegenden Erfindung enthält eine erfindungsgemäße Polymerzusammensetzung die erfindungsgemäße Stabilisatorzusammensetzung in einer Menge von 0,1 bis 20 phr, insbesondere etwa 0,5 bis etwa 15 phr oder etwa 1 bis etwa 12 phr. Die Einheit phr steht für "per hundred resin" und betrifft damit Gewichtsteile pro 100 Gewichtsteile Polymeres.

Vorzugsweise enthält eine erfindungsgemäße Polymerzusammensetzung als halogeniertes Polymeres zumindest anteilsweise PVC, wobei der PVC-Anteil insbesondere mindestens etwa 20, vorzugsweise mindestens etwa 50 Gew.-%, beispielsweise mindestens etwa 80 oder mindestens etwa 90 Gew.-% beträgt.

Die vorliegende Erfindung betrifft auch ein Verfahren zur Stabilisierung halogenhaltiger Polymerer, bei dem

ein halogenhaltiges Polymeres oder ein Gemisch aus zwei oder mehr halogenhaltige Polymeren oder ein Gemisch aus einem oder mehreren halogenhaltige Polymeren und einem oder mehreren halogenfreien Polymeren mit einer erfindungsgemäßen Stabilisatorzusammensetzung vermischt wird.

Die Vermischung von Polymeren oder Polymeren und der erfindungsgemäße Stabilisatorzusammensetzung kann grundsätzlich zu jedem beliebigen Zeitpunkt vor oder während der Verarbeitung des Polymeren erfolgen. So kann die Stabilisatorzusammensetzung beispielsweise dem in Pulver- oder Granulatform vorliegenden Polymeren vor der Verarbeitung zugemischt werden. Es ist jedoch ebenso möglich, die Stabilisatorzusammensetzung dem Polymeren oder den Polymeren in erweichtem oder geschmolzenem Zustand, beispielsweise während der Verarbeitung in einem Extruder, als Emulsion oder als Dispersion, als pastöse Mischung, als trockene Mischung, als Lösung oder Schmelze zuzusetzen.

Eine erfindungsgemäße Polymerzusammensetzung kann auf bekannte Weise in eine gewünschte Form gebracht werden. Geeignete Verfahren sind beispielsweise Kalandrieren, Extrudieren, Spritzgießen, Sintern, Extrusions-Blasen oder das Plastisol-Verfahren. Eine erfindungsgemäße Polymerzusammensetzung kann beispielsweise auch zur Herstellung von Schaumstoffen verwendet werden. Grundsätzlich eignen sich die erfindungsgemäßen Polymerzusammensetzungen zur Herstellung von hart- oder weich-PVC, insbesondere zur Herstellung von PVC-U.

Eine erfindungsgemäße Polymerzusammensetzung kann zu Formkörpern verarbeitet werden. Gegenstand der vorliegenden Erfindung sind daher auch Formkörper, mindestens enthaltend eine erfindungsgemäße Stabilisatorzusammensetzung oder eine erfindungsgemäße Polymerzusammensetzung.

Der Begriff "Formkörper" umfasst im Rahmen der vorliegenden Erfindung grundsätzlich alle dreidimensionalen Gebilde, die aus einer erfindungsgemäße Polymerzusammensetzung herstellbar sind. Der Begriff "Formkörper" umfasst im Rahmen der vorliegenden Erfindung beispielsweise Drahtummantelungen, Automobilbauteile, beispielsweise Automobilbauteile wie sie im Innenraum des Automobils, im Motorraum oder an den Außenflächen eingesetzt werden, Kabelisolierungen, Dekorationsfolien, Agrarfolien, Schläuche, Dichtungsprofile, Bürofolien, Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Platten, Schaumplatten., Coextrudate mit recyceltem Kern oder Gehäuse für elektrische Apparaturen oder Maschinen, beispielsweise Computer oder Haushaltsgeräte.

Weitere Beispiele für aus einer erfindungsgemäßen Polymerzusammensetzung herstellbare Formkörper sind Kunstleder, Bodenbeläge, Textilbeschichtungen, Tapeten, Coil-Coatings oder Unterbodenschutz für Kraftfahrzeuge.

Die Erfindung wird nachfolgend durch Beispiele näher erläutert.

**Beispiele**

Zur Überprüfung der Wirksamkeit der erfindungsgemäßen Stabilisatorzusammensetzungen wurden die in der folgenden Tabelle 1 angegebenen Rezepturen hergestellt. Die Rezeptur 8 entspricht der erfindungsgemäßen Zusammensetzung, während die Rezepturen 1 bis 7 zu Vergleichszwecken getestet wurden.

Tabelle 1:

| Beispielrezepturen | | | | | | | | |
|---|---|---|---|---|---|---|---|---|
| Rezepturen | Nr. 1 | Nr. 2 | Nr. 3 | Nr. 4 | Nr. 5 | Nr. 6 | Nr. 7 | Nr. 8 |
| PVC | 100 | 100 | 100 | 100 | 100 | 100 | 100 | 100 |
| Kreide | 5 | 5 | 5 | 5 | 5 | 5 | 5 | 5 |
| Titandioxid | 3 | 3 | 3 | 3 | 3 | 3 | 3 | 3 |
| Baerorapid® 10 F | 1 | 1 | 1 | 1 | 1 | 1 | 1 | 1 |
| Calciumhydroxid | 0,4 | 0,4 | 0,4 | 0,4 | 0,4 | 0,4 | 0,4 | 0,4 |
| Baerolub® LTP | 0,15 | 0,15 | 0,15 | 0,15 | 0,15 | 0,15 | 0,15 | 0,15 |
| Baerolub® PA | 0,5 | 0,5 | 0,5 | 0,5 | 0,5 | 0,5 | 0,5 | 0,5 |
| Antioxidans | 0,1 | 0,1 | 0,1 | 0,1 | 0,1 | 0,1 | 0,1 | 0,1 |
| Na-Perchlorat (geträgert, 10%) | | | | | 0,2 | 0,2 | 0,2 | 0,2 |
| Butylenglycolbis-3-aminocrotonat | | 0,2 | | 0,2 | | 0,2 | | 0,2 |
| THEIC | | | 0,43 | 0,43 | | | 0,43 | 0,43 |

Die nach den angegeben Rezepturen (erfindungsgemäße Rezeptur ist durch Fettdruck hervorgehoben) gefertigten Dryblends wurden auf einem Laborwalzwerk bei 180 °C binnen 3 Minuten zu Fellen verarbeitet. Die Thermostabilität der so erhaltenen PVC-Prüfstücke wurde statisch sowohl im Kongo-Rot-Test nach DIN VDE 0472/T614 quantitativ ermittelt (HCl-Wert), als auch im Mathis-Ofen (200 °C, Vorschub alle 5 Minuten) qualitativ visuell beurteilt. Zur Bestimmung der Anfangsfarbe wurde das PVC-Fell bei 190 °C zu Preßplatten weiterverarbeitet. Deren Farbe wurde anhand des CIE-LAB-Farbsystems gemessen. Zur Bestimmung der UV-Stabilität (Sun-Test) wurden aus den Preßplatten Prüfstücke im Format 19 x 19 mm geschnitten und für 25, 50, 75, 100, 125, 150 und 175 Stunden mit Kunstlicht (765 $W/m^2$, 300 - 830 nm Globalstrahlung) bestrahlt. Das Alterungsverhalten wurde qualitativ visuell bewertet.

Zur Bewitterung mit thermischer Belastung (Rottest) wurden ebenfalls Prüfstücke 19 x 19 mm für 1 Stunde mit Kunstlicht (765 $W/m^2$, 300 - 830 nm Globalstrahlung) bestrahlt und anschließend 1 Stunde bei 100 °C getempert. Auch hier fand anschließend eine qualitative visuelle Beurteilung (1 = beste Note, 6 = schlechteste Note) statt.

Die Ergebnisse der Untersuchungen sind der folgenden Tabelle 2 zu entnehmen.

Tabelle 2:

| Untersuchungsergebnisse | | | | | | | |
|---|---|---|---|---|---|---|---|
| Rezeptur | HCl-Wert (Minuten) | Verhalten im Mathis-Test | L-Wert | a-Wert | b-Wert | Suntest | Rottest |
| Nr. 1 | 7 | 5 | 73,6 | 10,5 | 6,5 | 5 | 5 |
| Nr. 2 | 7 | 4 | 82,2 | 7,2 | 9,6 | 4 | 4 |
| Nr. 3 | 13 | 3 | 93,7 | -0,6 | 13,9 | 2 | 2 |
| Nr.4 | 14 | 3 | 94,6 | -1,2 | 10,2 | 2 | 1 |
| Nr. 5 | 12 | 5 | 86,6 | 7,8 | 18,3 | 5 | 5 |
| Nr. 6 | 13 | 4 | 91,5 | 2,4 | 14,9 | 3 | 4 |
| Nr. 7 | 20 | 2 | 94,2 | -1,4 | 13,4 | 2 | 2 |
| Nr.8 | 21 | 1 | 94,6 | -1,4 | 9,3 | 1 | 1 |

Das durch Fettdruck hervorgehobene Ergebnis entspricht dem erfindungsgemäßen Beispiel.

**Patentansprüche**

1. Stabilisatorkombination, mindestens enthaltend einen Aminoalkohol und mindestens ein halogenhaltiges Salz einer Oxysäure und mindestens eine Verbindung mit einem Strukturelement der allgemeinen Formel I

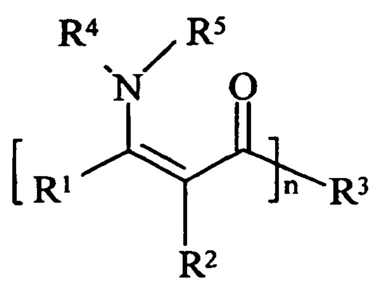

(I),

worin n für eine Zahl von 1 bis 100.000, die Reste $R^4$, $R^5$, $R^1$ und $R^2$ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest $R^1$ für einen gegebenenfalls substituierten Acylrest mit 2 bis 44 C-Atomen steht oder die Reste $R^1$ und $R^2$ zu einem aromatischen oder heterocyclischen System verbunden sind und worin der Rest $R^3$ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoalkylenrest oder Aminoalkyl- oder Aminoalkylenrest mit 1

bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, $NR^4$ oder $CH_2C(O)$ mit dem in Klammern stehenden Strukturelement verbunden ist, steht oder der Rest $R^3$ mit dem Rest $R^1$ so verbunden ist, dass insgesamt ein gegebenenfalls substituiertes, gesättigtes oder ungesättigtes heterocyclisches Ringsystem mit 4 bis 24 C-Atomen gebildet wird, wobei die Stabilisatorkombination frei von Zink ist.

2. Stabilisatorzusammensetzung nach Anspruch 1, **dadurch gekennzeichnet, dass** sie mindestens ein basisches Calciumsalz enthält.

3. Stabilisatorzusammensetzung nach einem der Ansprüche 1 oder 2, **dadurch gekennzeichnet, dass** sie mindestens ein Gleitmittel enthält.

4. Stabilisatorzusammensetzung nach einem der Ansprüche 1 bis 3, **dadurch gekennzeichnet, dass** sie als Aminoalkohol ein Isocyanurat enthält.

5. Stabilisatorzusammensetzung nach einem der Ansprüche 1 bis 4, **dadurch gekennzeichnet, dass** sie als basisches Calciumsalz Calciumhydroxid enthält.

6. Polymerzusammensetzung, mindestens enthaltend ein halogeniertes Polymeres und eine Stabilisatorzusammensetzung gemäß einem der Ansprüche 1 bis 5.

7. Polymerzusammensetzung nach Anspruch 6, **dadurch gekennzeichnet, dass** sie die Stabilisatorzusammensetzung in einer Menge von 0,1 bis 15 Gew.-%, bezogen auf den Gehalt an halogenierten Polymeren, enthält.

8. Formkörper, mindestens enthaltend eine Stabilisatorzusammensetzung gemäß einem der Ansprüche 1 bis 5 oder eine Polymerzusammensetzung gemäß Anspruch 6 oder 7.

9. Verfahren zur Stabilisierung halogenhaltiger Polymerer, bei dem ein halogenhaltiges Polymeres oder ein Gemisch aus zwei oder mehr halogenhaltige Polymeren oder ein Gemisch aus einem oder mehreren halogenhaltige Polymeren und einem oder mehreren halogenfreien Polymeren mit einer Stabilisatorzusammensetzung gemäß einem der Ansprüche 1 bis 5 vermischt wird.

**Claims**

1. Stabiliser combination, at least comprising an amino alcohol and at least one halogen-containing salt of an oxy acid and at least one compound having a structural element of the general formula I

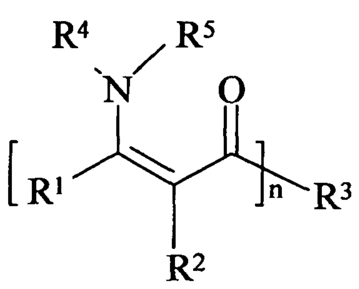

(I),

wherein n is a number from 1 to 100,000, the radicals $R^4$, $R^5$, $R^1$ and $R^2$ are each independently of the others hydrogen, an unsubstituted or substituted linear or branched, saturated or unsaturated aliphatic alkyl radical having from 1 to 44 carbon atoms, an unsubstituted or substituted saturated or unsaturated cycloalkyl radical having from 6 to 44 carbon atoms or an unsubstituted or substituted aryl radical having from 6 to 44 carbon atoms or an unsubstituted or substituted aralkyl radical having from 7 to 44 carbon atoms, or the radical $R^1$ is an unsubstituted

or substituted acyl radical having from 2 to 44 carbon atoms or the radicals $R^1$ and $R^2$ are linked to form an aromatic or heterocyclic system and wherein the radical $R^3$ is hydrogen, an unsubstituted or substituted, linear or branched, saturated or unsaturated aliphatic alkyl or alkylene radical or oxyalkyl or oxyalkylene radical or mercaptoalkyl or mercaptoalkylene radical or aminoalkyl or aminoalkylene radical having from 1 to 44 carbon atoms, an unsubstituted or substituted saturated or unsaturated cycloalkyl or cycloalkylene radical or oxycycloalkyl or oxycycloalkylene radical or mercaptocycloalkyl or mercaptocycloalkylene radical or aminocycloalkyl or aminocycloalkylene radical having from 6 to 44 carbon atoms or an unsubstituted or substituted aryl or arylene radical having from 6 to 44 carbon atoms or an ether or thioether radical having from 1 to 20 O or S atoms or O and S atoms, or is a polymer that is bonded to the structural element in brackets by way of O, S, NH, $NR^4$ or $CH_2C(O)$, or the radical $R^3$ is so linked to the radical $R^1$ that in total an unsubstituted or substituted, saturated or unsaturated heterocyclic ring system having from 4 to 24 carbon atoms is formed, wherein the stabiliser composition is zinc-free.

2. Stabiliser composition according to claim 1, **characterised in that** it comprises at least one basic calcium salt.

3. Stabiliser composition according to either one of claims 1 and 2, **characterised in that** it comprises at least one lubricant.

4. Stabiliser composition according to any one of claims 1 to 3, **characterised in that** it comprises an isocyanurate as amino alcohol.

5. Stabiliser composition according to any one of claims 1 to 4, **characterised in that** it comprises calcium hydroxide as basic calcium salt.

6. Polymer composition, at least comprising a halogenated polymer and a stabiliser composition according to any one of claims 1 to 5.

7. Polymer composition according to claim 6, **characterised in that** it comprises the stabiliser composition in an amount of from 0.1 to 15 % by weight, based on the content of halogenated polymers.

8. Moulded article, at least comprising a stabiliser composition according to any one of claims 1 to 5 or a polymer composition according to claim 6 or 7.

9. Method of stabilising halogen-containing polymers in which a halogen-containing polymer or a mixture of two or more halogen-containing polymers or a mixture of one or more halogen-containing polymers and one or more halogen-free polymers is mixed with a stabiliser composition according to any one of claims 1 to 5.

## Revendications

1. Composition de stabilisants contenant au moins un alcool aminé et au moins un sel d'un acide oxygénique halogéné et au moins un composé ayant un élément de structure de la formule générale I

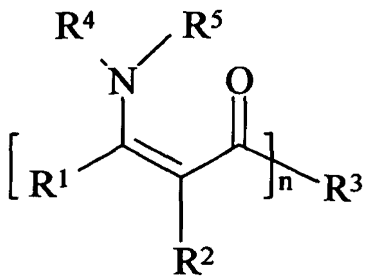

(I),

dans laquelle n est un nombre de 1 à 100.000, les substituants $R^4$, $R^5$, $R^1$ et $R^2$ représentent respectivement indépendamment l'un de l'autre l'hydrogène, un groupe alkyle aliphatique avec 1 à 44 atomes de carbone le cas échéant substitué linéaire ou ramifié, saturé ou insaturé, un groupe cycloalkyle avec 6 à 44 atomes de carbone

le cas échéant substitué saturé ou insaturé, ou un groupe aryle avec 6 à 44 atomes de carbone le cas échéant substitué, ou un groupe aralkyle avec 7 à 44 atomes de carbone le cas échéant substitué; ou le substituant $R^1$ représente un groupe acyle avec 2 à 44 atomes de carbone le cas échéant substitué ou les substituants $R^1$ et $R^2$ sont reliés entre eux en un système aromatique ou hétérocyclique et dans lequel le substituant $R^3$ représente l'hydrogène, un groupe alkyle ou alkylene ou oxyalkyle ou oxyalkylene ou mercaptoalkyle ou mercaptoalkylene ou aminoalkyle ou aminoalkylene aliphatique avec 1 à 44 atomes de carbone le cas échéant substitué, linéaire ou ramifié, saturé ou insaturé, un groupe cycloalkyle ou cycloalkylene ou oxycycloalkyle ou oxycycloalkylene ou mercaptocycloalkyle ou mercaptocycloalkylene ou aminocycloalkyle ou aminocycloalkylene avec 6 à 44 atomes de carbone le cas échéant substitué saturé ou insaturé, ou un groupe aryle ou arylene avec 6 à 44 atomes de carbone le cas échéant substitué, ou un groupe d'éther ou de thioéther avec 1 à 20 atomes d'oxygène ou de sulfure ou d'oxygène et de sulfure ou pour un polymère, lequel polymère est relié par O, S, NH, $NR^4$ ou $CH_2C(O)$ à l'élément de structure entre parenthèses, ou le substituant $R^3$ est relié au substituant $R^1$, de manière telle qu'en tout un système cyclique hétérocyclique avec 4 à 24 atomes de carbone le cas échéant substitué saturé ou insaturé est formé, la composition de stabilisants étant exempte de zinc.

**2.** Composition de stabilisants selon la revendication 1, **caractérisée en ce qu'**elle contient au moins un sel basique de calcium

**3.** Composition de stabilisants selon l'une des revendications 1 ou 2, **caractérisée en ce qu'**elle contient au moins un lubrifiant.

**4.** Composition de stabilisants selon l'une des revendications 1 à 3, **caractérisée en ce qu'**elle contient un isocyanurate comme alcool aminé.

**5.** Composition de stabilisants selon l'une des revendications 1 à 4, **caractérisée en ce qu'**elle contient de l'hydroxyde de calcium comme sel basique de calcium.

**6.** Composition de polymère comportant au moins un polymère halogéné et une composition de stabilisants selon l'une des revendications 1 à 5.

**7.** Composition de polymère selon la revendication 6, **caractérisée en ce qu'**elle contient la composition de stabilisants dans une quantité de 0,1 à 15 pourcentage en poids, relative à la teneur des polymères halogénés

**8.** Matière moulable comportant au moins une composition de stabilisants selon l'une des revendications 1 à 5 ou une composition de polymère selon la revendication 6 ou 7.

**9.** Procédé pour stabiliser un polymère halogéné, dans lequel un polymère halogéné ou un mélange de deux ou plus polymères halogénés ou un mélange d'un ou plusieurs polymères halogénés et un ou plusieurs polymères non halogénés est mélangé avec une composition de stabilisants selon l'une des revendications 1 à 5.